**Europäisches Patentamt**

**European Patent Office**

**Office européen des brevets**

(19)

(11) Veröffentlichungsnummer: **0 195 364 B1**

(12) **EUROPÄISCHE PATENTSCHRIFT**

(45) Veröffentlichungstag der Patentschrift:
**28.12.88**

(21) Anmeldenummer: **86103342.1**

(22) Anmeldetag: **12.03.86**

(51) Int. Cl.⁴: **E 03 F 5/042,** E 03 F 7/04, E 03 C 1/12

(54) **Abwasserrohr mit selbsttätiger Rückstausperre.**

(30) Priorität: **19.03.85 DE 3509781**

(43) Veröffentlichungstag der Anmeldung:
**24.09.86 Patentblatt 86/39**

(45) Bekanntmachung des Hinweises auf die Patenterteilung:
**28.12.88 Patentblatt 88/52**

(84) Benannte Vertragsstaaten:
**AT BE CH DE FR GB IT LI NL SE**

(56) Entgegenhaltungen:
**EP-A- 0 074 034**
**EP-A- 0 111 716**
**DE-A- 3 033 296**
**FR-A- 2 505 967**

(73) Patentinhaber: **Dallmer GmbH & Co.,
Wiebelsheidestrasse 25, D-5760 Arnsberg 1 (DE)**

(72) Erfinder: **Dallmer, Johannes, Ing. grad.,
Wiebelsheidestrasse 25, D-5760 Arnsberg 1 (DE)**

(74) Vertreter: **Fritz, Herbert, Dipl.-Ing., Mühlenberg 74,
D-5760 Arnsberg 1 (DE)**

## Beschreibung

Die Erfindung bezieht sich auf ein Abwasserrohr mit selbsttätiger Rückstausperre mit den Merkmalen nach dem Oberbegriff des Hauptanspruches.

Bei einem bekannten Abwasserrohr der gleichen Art (DE-A-34 37 000) ist eine Rückschlagklappe vorgesehen, die normalerweise durch Federkraft hochgeklappt, also in der Öffnungsstellung gehalten wird und nur bei Rückstau zugeklappt wird, sei es von Hand mit Hilfe eines Schiebers, sei es automatisch mittels einer im Deckel angebrachten Gummiblase, die sich bei Rückstau füllt und die Klappe gegen ihren Sitz drückt. Bei einem weiteren bekannten Abwasserrohr ähnlicher Art (EP-A-0 074 034 und DE-A-30 33 296) sind in einem Gehäuse Rückschlagklappen gelagert, die normalerweise an ihrem Sitz anliegen durch ihr Eigengewicht, so dass von vorne herein eine Sperre gegen Rückstau gegeben ist, und die sich durch den Zuflussstrom abheben und diesen freigeben. Bei dem vorbenannten Stand der Technik sind die Mittel zur Lagerung der jeweiligen Rückschlagklappe nur im Prinzip angegeben.

Die Aufgabe der vorliegenden Erfindung ist darin zu sehen, technische Mittel zur Lagerung der jeweiligen Rückschlagklappen vorzusehen, die universell anwendbar sind, ein werkzeugloses Einsetzen und Abnehmen der jeweiligen Klappe ermöglichen und im Betrieb bei den anfallenden Kräften eine Verlagerung der geometrischen Klappenachse verhindern.

Diese Aufgabe wird mit den im Hauptanspruch angegebenen Mitteln gelöst.

Der Anspruch 2 hat die Kombination einer solchen Rückschlagklappe mit einer Feder zum Inhalt.

Die Lagerelemente nach der Erfindung sichern einerseits eine leichte Drehbarkeit der Klappe. Dabei wird aber auch durch die Ausbildung des winkelförmigen Raststeges eine Anbringung der Klappe durch Einrasten und ebenso eine Abnahme durch Ausrasten ermöglicht und eine Querverlagerung der Achse, insbesondere nach oben, verhindert. Auch die Verbindung der Profilplatten, welche die Achszapfen aufnehmen, mit dem Gehäuse ist durch Einklemmung lagesicher gemacht. Dadurch, dass im Betrieb bei den auftretenden Kräften die Achslage der Klappe gesichert ist, ergibt sich auch eine Gewähr für einen zentrierten Sitz bei Rückstau. Nach der Lehre des Patentanspruchs 2 ist in einfacher Weise eine Kombination mit einer Feder angegeben, durch welche die Klappe in der aufgeklappten Stellung gehalten ist.

Auf den Zeichnungen ist ein Ausführungsbeispiel der Erfindung dargestellt, welches nachfolgend näher beschrieben wird. Es zeigen

Fig. 1 einen senkrechten Längsschnitt durch einen Teilbereich eines Abwasserrohres nach der Erfindung;

Fig. 2 einen senkrechten Querschnitt durch dieses Abwasserrohr;

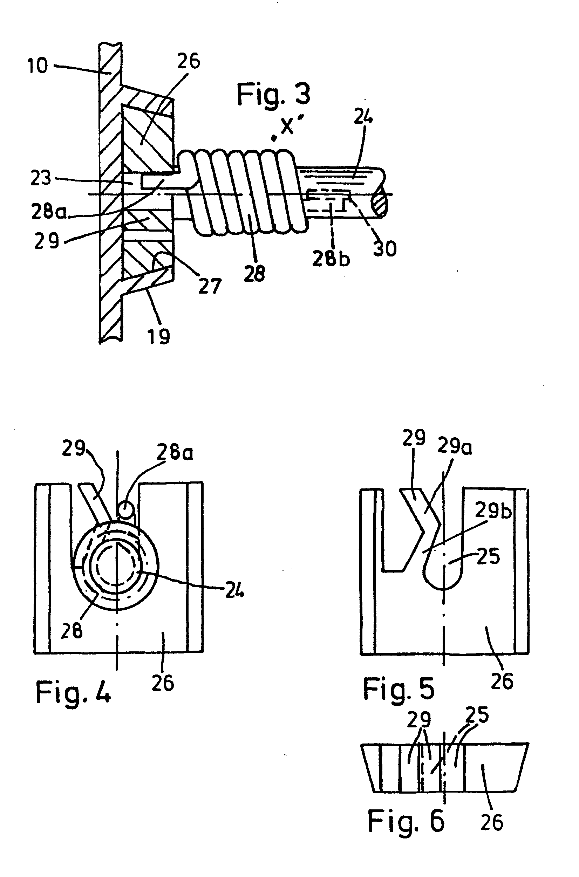

Fig. 3 zeigt in vergrössertem Massstab den Bereich «X» von Fig. 2;

Fig. 4 ist eine Stirnansicht der Achslagerung gemäss Fig. 3;

Fig. 5 zeigt eine Stirnansicht einer Profilplatte der Achslagerung und

Fig. 6 eine Draufsicht auf diese Profilplatte nach Fig. 5.

Das Abwasserrohr besitzt ein Gehäuse 10 mit einem Zulaufstutzen 11 und einem vorzugsweise koaxial dazu angeordneten Auslaufstutzen (nicht dargestellt). Weiterhin hat das Gehäuse 10 oben eine Reinigungsöffnung 15, die durch einen nicht dargestellten, lösbaren Deckel abgeschlossen ist.

In dem Gehäuse 10 ist eine den Zulaufstutzen verschliessende und freigebende Klappe 20 höhenverstellbar gelagert. Die Klappe 20 ist tellerförmig ausgebildet und an einer horizontalen Achse 24 über dem Zulaufstutzen angebracht. Es sind beidendige Achszapfen 23 gebildet, die drehbar in Achslagern gehalten sind.

Die Achslager sind jeweils Profilplatten 26. Diese sind jeweils in einer Nut 27 der Lageraufnahme 19 des Gehäuses eingeschoben und durch Selbstklemmung gehalten.

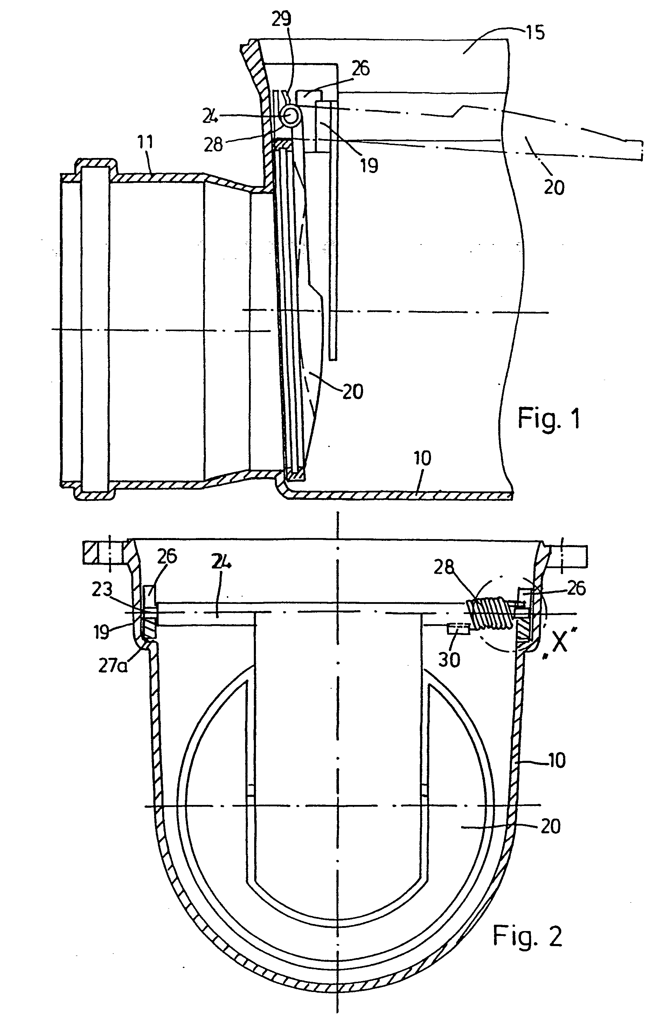

Jede Profilplatte 26 hat einen hinterschnittenen, vorzugsweise trapezförmigen Querschnitt. Sie wird von oben her in eine entsprechend trapezförmige Nut 27 des Gehäuses 10 eingesetzt, wobei der Nutgrund 27a (vergleiche Fig. 2) die Einstecktiefe der Profilplatte 26 nach unten hin begrenzt. Die seitlichen Trapezflächen der Profilplatte 26 und der Nut 27 bewirken eine Selbstklemmung, so dass eine fixierte Lage gesichert ist.

Jede Profilplatte 26 hat eine nach oben hin geöffnete im Prinzip U-förmige Einhängenut 25, die sich über die gesamte Plattenstärke erstreckt. In die Nut 25 wird jeweils ein Achszapfen von oben eingehängt. Dabei wird eine Seite der Nut durch einen angeformten Raststeg 29 gebildet. Der Raststeg hat einen unteren Schenkel 29b, der sich tangential an den halbkreisförmigen Nutgrund anschliesst und sich etwa bis in die Mitte der Nut erstreckt. Dort schliesst sich abgewinkelt ein oberer Schenkel 29a an. Es entsteht bei dieser Anordnung oben an der Nut ein V-förmiger Querschnitt, der das Einführen des Achslagers zum Einrasten ermöglicht.

In mindestens einem Längenendbereich der Achse 24 ist um dieselbe eine Schraubenfeder 28 angeordnet, die mit einem Federschenkel 28a in der Einhängenut 25 gehalten ist und die sich mit ihrem anderen Federschenkel 28b an einem achsseitigen Widerlager 30 abstützt.

Diese Schraubenfeder 28 hat die Aufgabe, die Klappe 20 in der hochgeschwenkten Stellung zu halten, wie sie auf Fig. 1 in strichpunktierten Linien dargestellt ist.

Die Bewegung der Klappe 20 in die Schliessstellung kann entweder von Hand mittels nicht dargestellter Schieber erfolgen oder durch zusätzliche an sich bekannte Sperrelemente, wie zum Beispiel eine Gummiblase, die sich bei Rückstau füllt und die Klappe gegen ihren Sitz drückt.

Das Gehäuse 10 ist in bevorzugter Weise einteilig aus Kunststoff hergestellt. Die Lageraufnahme 19 mit Nut 27 ist am Gehäuse angeformt.

Die Profilplatte 20 besteht ebenfalls einteilig aus Kunststoff.

## Patentansprüche

1. Abwasserrohr mit selbsttägiger Rückstausperre mit den Merkmalen:
- es ist eine Rückschlagklappe (20) hochschwenkbar innen in einem Gehäuse (10), das oben eine Reinigungsöffnung (15) hat, gehalten, die bei Rückstau innen an einer Zulauföffnung anliegt;
- Zapfen (23) einer Schwenkachse (24) der Rückschlagklappe (20) werden von gehäuseseitig angebrachten Achslagern (26) aufgenommen;
gekennzeichnet durch die nachfolgenden Merkmale:
- die Achszapfen (23) sind jeweils in einer Profilplatte (26) gelagert, die von oben einschiebbar selbstklemmend in einer profilierten Nut (27) des Gehäuses eingesetzt ist;
- jede Profilplatte hat zur Aufnahme des Achszapfens eine im Prinzip U-förmige Einhängenut (25), die an einer Seite durch einen angeformten Raststeg (29) begrenzt ist;
- der Raststeg besteht aus einem unteren Schenkel (29b), der sich tangential an einen halbkreisförmigen Nutgrund anschliesst und sich etwa bis zur Nutmitte erstreckt, wo sich angewinkelt ein oberer Schenkel (29a) anschliesst, der eine V-förmige Einführung bildet.

2. Abwasserrohr nach Anspruch 1, dadurch gekennzeichnet, dass um mindestens einen Längenendbereich der Achse (24) eine die Klappe (20) in die Öffnungsstellung bringende und in dieser haltende Schraubenfeder (28) angeordnet ist, die mit einem Federschenkel (28a) in der Einhängenut (25) gehalten ist und die sich mit ihrem andern Federschenkel (28b) an einem Widerlager (30) der Achse (24) abstützt.

## Claims

1. Waste-water pipe with automatic backpressure stop having the features:
- in a housing (10) which has a cleaning opening (15) at its top there is held at the inside a nonreturn flap (20) so as to be pivotable upwardly, said nonreturn flap resting against a supply opening in the case of back pressure;
- journals (23) of a pivot shaft (24) of the nonreturn flap (20) are received by journal bearings (26) provided at the sides of the housing;
characterised by the following features:
- the journal bearings (23) are each mounted in a section plate (26) which is inserted in a sectioned groove (27) of the housing in such a manner that it is insertable from above and self-clamping;
- each section plate has, for receiving the journal bearing, a suspension groove (25) which is U-shaped in principle and limited at one side by an integral stop web (29);
- the stop web consists of a lower leg (29b) which tangentially joins up with a semi-circular groove bottom and extends approximately up to the middle of the groove, where an upper leg (29a) joins up in an angled manner forming a V-shaped insertion.

2. Waste-water pipe according to claim 1, characterised in that at least around one of the longitudinal end regions of the shaft (24) there is arranged a helical spring (28) which moves the flap (20) in its opening position and maintains it in this position, the spring being held with a resilient leg (28a) in the suspension groove (25) and, with its other resilient leg (28b) being supported at a counter bearing (30) of the shaft (24).

## Revendications

1. Tuyau d'égout comprenant une valve antirefoulement automatique ayant les caractéristiques suivantes:
- un clapet de retenue (20) est maintenu basculant à l'entérieur d'un corps (10) dont la partie supérieure comporte une ouverture de nettoyage (15), clapet qui, au refoulement, vient s'appliquer à l'intérieur sur une ouverture d'alimentation;
- des tourillons (23) d'un axe de pivotement (24) du clapet de retenue (20) sont logés dans des appuis d'axe (26) disposés du côté du corps;
caractérisé en ce que
- les tourillons (23) sont chacun logés dans une plaque profilée (26) pouvant être insérée par le haut, à auto-blocage, dans une rainure profilée (27) du corps;
- chacune des plaques profilées possède, pour recevoir le tourillon, une rainure a'accrochage (25) généralement en U, limitée d'un côté par une barrette d'encliquetage (29) façonné;
- la barrette d'encliquetage est constituée d'une branche inférieure (29b) qui se raccorde tangentiellement à un fond de rainure de forme semi-circulaire, et s'étend à peu près jusqu'au centre de la rainure, à laquelle se raccorde, en faisant un angle, une branche supérieure (29a) formant une ouverture d'introduction en V.

2. Tuyau d'égout selon la revendication 1, caractérisé en ce qu'un ressort à boudin (28) tendant à amener le clapet (20) en position d'ouverture et à le maintenir dans ladite position, est disposé au moins autour d'une zone d'extrémité longitudinale de l'axe (24), ressort maintenu par une branche de ressort (28a) dans la rainure d'accrochage et s'appuyant par son autre branche de ressort (28b) sur une butée (30) de l'axe (24).

Fig. 1

Fig. 2

Fig. 3

Fig. 4

Fig. 5

Fig. 6